# EUROPÄISCHE PATENTSCHRIFT

(11) **EP 1 076 036 B1**
(45) Veröffentlichungstag und Bekanntmachung des Hinweises auf die Patenterteilung: **08.10.2003**
(21) Anmeldenummer: 00115355.0
(22) Anmeldetag: 15.07.2000
(51) Int. Cl.: C01G 25/02

(54) **Verfahren zur Herstellung von Produkten auf der Basis von kubisch stabilisiertem Zirkonoxid, Produkte erhältlich nach diesem Verfahren und deren Verwendung**
Method to produce compounds based upon stabilized, cubic zirkonoxide, products obtained and use
Procédé de préparation de produits a base d'oxide de zirconium cubique et stabilisé, produits obtenus et utlisations

(30) Priorität: 13.08.1999 FR 9910476
(43) Veröffentlichungstag der Anmeldung: 14.02.2001
(73) Patentinhaber: dmc2 Degussa Metals Catalysts Cerdec AG, 60287 Frankfurt am Main (DE)
(72) Erfinder: Baumann, Martin, Dr., 61118 Bad Vilbel (DE); Sandri, Wolfgang, 04680 Colditz (DE)
(74) Vertreter: Reinhardt, Markus, Dipl.-Ing.

(56) Entgegenhaltungen:
- EP-A- 0 460 959
- EP-A- 0 501 143
- DD-A- 83 983
- DATABASE CHEMABS [Online] CHEMICAL ABSTRACTS SERVICE, COLUMBUS, OHIO, US; JIN, YUZHUO: "Method for producing of fused ZrO2 with stable calcia" retrieved from STN Database accession no. 132:25884 XP002153362 & CN 1 158 325 A (PEOP. REP. CHINA) 3. September 1997 (1997-09-03)

## Beschreibung

Die Erfindung richtet sich auf ein Verfahren zur Herstellung von Produkten auf der Basis von teilweise oder vollständig kubisch stabilisiertem Zirkonoxid aus einer pulverförmigen Quelle für Zirkonoxid und einem oder mehreren stabilisierenden Oxiden aus der Reihe MgO, CrO, SrO, Sc₂O₃, Y₂O₃, La₂O₃ und Lanthanidoxiden in wirksamer Menge, wobei das Verfahren eine thermische Behandlung eines Pulvergemischs der Rohstoffe umfaßt. Die Erfindung richtet sich ferner auf erfindungsgemäß erhältliches teilweise oder vollständig kubisch stabilisiertes Zirkonoxid, welches in einer amorphen Kieselsäurematrix eingebettet ist sowie auf deren Verwendung.

Die Polymorphie von Zirkonoxid (ZrO₂) steht einer breiteren Verwendung in der keramischen Industrie häufig entgegen. Beim Erhitzen von Zirkonoxid kommt es zu einer Phasenumwandlung, und die damit verbundene Volumenänderung macht die Verwendung häufig unmöglich. Es ist bekannt, daß sich zur Stabilisierung einer kubischen ZrO₂-Kristallmodifikation verschiedene Oxide, wie Kalziumoxid, Magnesiumoxid und Yttriumoxid in das Kristallgitter einbauen lassen; hieraus resultiert eine feste Lösung. Sofern der Gehalt an stabilisierenden Oxiden ausreichend ist, wird ein vollständig kubisch stabilisiertes Zirkonoxid erhalten. Sofern der Gehalt an stabilisierenden Metalloxiden zu niedrig ist, wird dagegen ein teilweise kubisch stabilisiertes Zirkonoxid erhalten; letzteres ist polymorph und besteht im wesentlichen aus einer kubischen und einer metastabilen tetragonalen ZrO₂-Phase. Einen Überblick über teilweise und vollständig kubisch stabilisiertes Zirkonoxid, ein Phasendiagramm des Systems ZrO₂-CaO, Verfahren zur Herstellung von kubisch stabilisiertem Zirkonoxid sowie dessen Verwendung vermittelt ein Firmenbericht von Stanford Material Company, San Mateo, California, USA (http:\\www.stanfordmaterials.com/ZrO₂.html). Während beispielsweise der Einbau von mindestens 16 mol-% CaO oder 8 mol-% Y₂O₃ in die Zirkondioxid-Struktur zu einem vollständig kubisch stabilisierten Zirkonoxid führt, sind in Gegenwart eines geringeren Gehalts an stabilisierenden Oxiden, beispielsweise 8 mol-% CaO oder 3-4 mol-% Y₂O₃ nur teilweise kubisch stabilisierte Zirkonoxide erhältlich. Obgleich vollständig kubisch stabilisiertes Zirkondioxid die höchste Temperaturstabilität aufweist, ist teilweise kubisch stabilisiertes Zirkondioxid bereits außergewöhnlich transformationsstabil. Vollständig und teilweise kubisch stabilisiertes Zirkonoxid kann in Sinterkeramik als auch in Sauerstoffsensoren sowie Brennstoffzellen eingesetzt werden.

Teilweise kubisch stabilisiertes Zirkonoxid läßt sich durch die sogenannte in situ-Stabilisierung herstellen: Hierbei wird aus feinteiligem monoklinen Zirkonoxid und einem feinteiligen stabilisierenden Oxid ein Pulvergemisch erzeugt; dieses wird in einen Grünkörper überführt; die Phasenumwandlung wird durch einen Sinterprozeß bei etwa 1700 °C erzielt. Die erzielbare Phasenumwandlung ist unvollständig, so daß die daraus resultierenden Produkte nur eine eingeschränkte Anwendung finden können. Qualitativ höherwertiges kubisch stabilisiertes Zirkonoxid läßt sich durch einen in dem genannten Dokument beschriebenen Mehrstufenprozeß gewinnen: Dieser Prozeß umfaßt eine Copräzipitation von Zirkoniumhydroxid mit einem stabilisierenden Metallhydroxid und eine sich anschließende Kalzinierung. Nachteilig an diesem Verfahren ist die Mehrstufigkeit sowie das Erfordernis, von Zirkonylchlorid ausgehen zu müssen.

Aufgabe der vorliegenden Erfindung ist es, ein weiteres Verfahren aufzuzeigen, womit in einfacher Weise teilweise oder vollständig kubisch stabilisiertes Zirkonoxid erhältlich ist. Eine weitere Aufgabe besteht darin, teilweise oder vollständig kubisch stabilisiertes Zirkonoxid, das in einer amorphen Kieselsäurematrix eingebettet ist, unter Verwendung von Zirkonsilikat zu gewinnen. Weitere der Erfindung zugrundeliegende Aufgaben ergeben sich aus der weiteren Beschreibung.

Gefunden wurde ein Verfahren zur Herstellung von Produkten auf der Basis von teilweise bis vollständig kubisch stabilisiertem Zirkonoxid (ZrO₂), umfassend eine thermische Behandlung eines eine Quelle für Zirkonoxid und ein oder mehrere stabilisierende Metalloxide aus der Reihe MgO, CaO, SrO, Sc₂O₃, Y₂O₃, La₂O₃ und Lanthanidoxide in wirksamer Menge enthaltenden Pulvergemischs, das dadurch gekennzeichnet ist, daß man das Pulvergemisch in einem Lichtbogen- oder Induktionsschmelzofen schmilzt, die Schmelze aus dem Ofen abzieht und mittels eines inerten Kühlgases und/oder Wasser abschreckt.

Die Unteransprüche richten sich auf bevorzugte Ausführungsformen des Verfahrens, wonach auch Produkte erhältlich sind, welche kubisch stabilisiertes Zirkonoxid in einer amorphen Kieselsäurematrix eingebettet enthalten. Besonders bevorzugt wird das Pulvergemisch in einem Hochfrequenz- oder Mittelfrequenz-Induktionsschmelzofen mit einem Sinterkrustentiegel bei einer Temperatur im Bereich von 2200 bis 3000 °C aufgeschmolzen, die Schmelze in Form eines Strahls aus dem Ofen abgezogen und in freiem Fall durch Anblasen mit einem inerten Kühlgas, vorzugsweise Luft, und/oder durch Besprühen mit Wasser abgeschreckt.

Durch das erfindungsgemäße Verfahren läßt sich in Abhängigkeit von der eingesetzten Quelle für ZrO₂ sowohl teilweise oder vorzugsweise vollständig kubisch stabilisiertes Zirkonoxid per se oder in Form eines mit amorpher Kieselsäure umhüllten Produktes gewinnen.

Bei der in dem Verfahren eingesetzten Quelle für Zirkonoxid handelt es sich um Verbindungen, welche unter den Verfahrensbedingungen Zirkonoxid bilden, insbesondere um oxidische und/oder silikatische Verbindungen von Zirkonium. Beispielsweise handelt es sich um monoklines Zirkonoxid, polymorphes Zirkonoxid ohne oder mit geringerem Gehalt an kubischer Phase als diese verfahrensgemäß erhalten werden soll, Zirkonsilikat (ZrSiO₄), das thermisch zu ZrO₂ und SiO₂ gespalten wird, oder Gemische aus ZrO₂ und ZrSiO₄ sind weitere Alternativen.

Bei den stabilisierenden Oxiden handelt es sich insbesondere um Erdalkalimetalloxide, wie MgO, CaO und SrO, Scandium- und Yttriumoxid sowie um Oxide von Lanthan und den Lanthaniden, wie insbesondere Cer. Das oder die stabilisierenden Oxide werden in wirksamer Menge eingesetzt, wobei unter wirksam eine solche Menge verstanden wird, die zur Bildung einer kubischen Phase oder eines aus einer kubischen und einer tetragonalen und/oder monoklinen Phase bestehenden polymorphen Systems ausreicht. Erfindungsgemäß gewonnenes teilweise oder vollständig kubisch stabilisiertes Zirkonoxid ist im wesentlichen frei von monoklinem Zirkonoxid. Gemäß einer bevorzugten Ausführungsform werden zur Stabilisierung ein oder mehrere farbgebende Oxide aus der Reihe La₂O₃, CeO₂, Ce₂O₃ und Oxiden von Praseodym, Neodym, Samarium, Gadolinium und Terbium in einer Menge von 0,1 bis 0,3 Metalläquivalenten pro Mol ZrO₂ einsetzt.

Üblicherweise werden pro Mol der Quelle für Zirkonoxid (ZrO₂) ein oder mehrere stabilisierende Metalloxide in einer Gesamtmenge entsprechend 0,05 bis 0,5 Metalläquivalenten und vorzugsweise 0,1 bis 0,3 Metalläquivalenten eingesetzt. Überwiegend oder vollständig kubisch stabilisiertes Zirkonoxid weist üblicherweise ein Atomverhältnis des/der stabilisierenden Metallatome Me zu Zr im Bereich von 0,15 bis 0,35 auf.

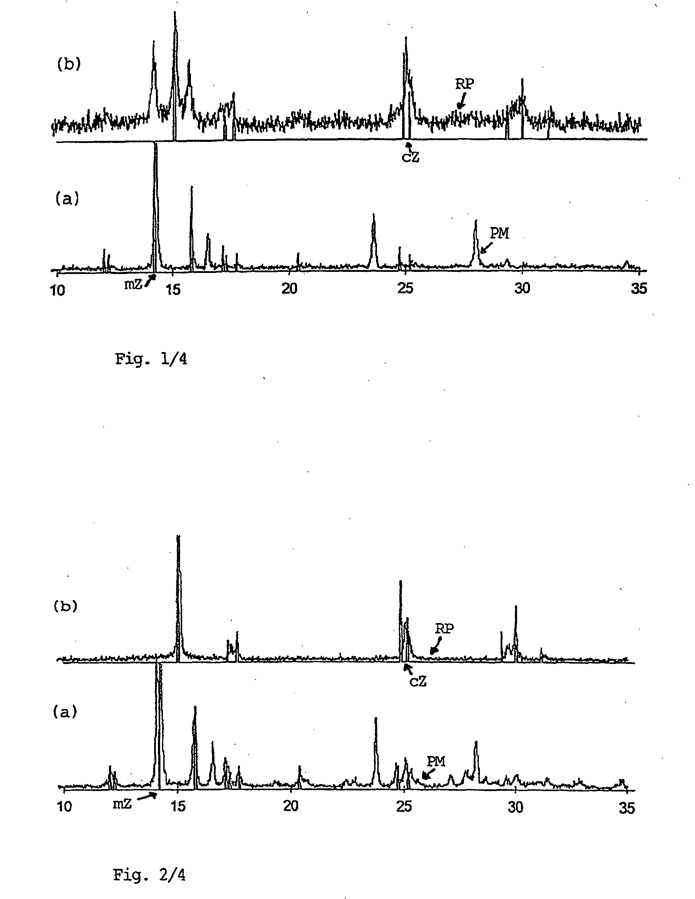

Während die stabilisierende Wirkung von Magnesiumoxid, Kalziumoxid und Yttriumoxid wohl bekannt ist, eignen sich auch Strontiumoxid, Scandiumoxid, Lanthanoxid und Lanthanidoxide zur Stabilisierung. Phasendiagramme von ZrO₂-La₂O₃ und ZrO₂-CeO₂ sind bekannt, nicht aber solche von ZrO₂ mit anderen Lanthanidoxiden. Mit Oxiden von Lanthan, Cer, Praseodym, Neodym, Samarium, Gadolinium und Terbium stabilisiertes Zirkonoxid weist in Abhängigkeit vom farbgebenden stabilisierenden Metallatom unterschiedlich gelbe Farbtöne auf. Diese Produkte sind demgemäß als Pigmente verwendbar. Bei der Mitverwendung oder alleinigen Verwendung von Zirkonsilikat als Quelle für Zirkonoxid im erfindungsgemäßen Verfahren wird teilweise oder vollständig kubisch stabilisiertes Zirkonoxid erhalten, weil unter den Verfahrensbedingungen, einer Schmelze des Pulvergemischs, Zirkonsilikat thermisch zu Zirkonoxid und Kieselsäure gespalten wird. Durch Abschrecken der Schmelze kristallisiert infolge der Anwesenheit stabilisierender Metalloxide das Zirkonoxid zumindest teilweise, vorzugsweise vollständig in kubischer Kristallmodifikation aus. Die bei der thermischen Spaltung entstehende Kieselsäure umhüllt die Kristalle als amorphe Phase. Zur thermischen Spaltung von Zirkonsilikat wird auf die EP-A 0 501 143 verwiesen. Während bei der thermischen Spaltung von Zirkonsilikat in Abwesenheit von stabilisierenden Metalloxiden gemäß EP-A 0 501 143 monoklines Zirkonoxid in der amorphen Kieselsäurephase eingeschlossen ist, entsteht im erfindungsgemäßen Verfahren teilweise oder vollständig kubisch stabilisiertes Zirkonoxid, das in der amorphen Kieselsäurephase eingebettet ist. Die Röntgenbeugungsaufnahmen gemäß den Figuren 1 bis 4, welche im Beispielteil abgehandelt werden, verdeutlichen dies.

Durch die Verwendung eines Gemischs aus Zirkonsilikat und monoklinem Zirkonoxid als Quelle für Zirkonoxid, kann die Menge an amorpher Kieselsäurephase reduziert werden. Alternativ hierzu läßt sich die amorphe Kieselsäurephase ganz oder teilweise durch Behandlung mit einer Alkalilauge bei 100 bis 200 °C analog dem in der EP-A 0 501 142 beschriebenen Verfahren auslaugen.

Außer der stofflichen Zusammensetzung des Pulvergemischs ist für das erfindungsgemäße Verfahren wesentlich, daß das Pulvergemisch vollständig aufgeschmolzen wird. Im Hinblick auf die geringe Wärmeleitfähigkeit der Ausgangsmaterialien sowie des hohen Schmelzpunkts des Pulvergemischs eignet sich hierfür ein Lichtbogenschmelzofen oder ein Induktionsschmelzofen, wobei letzterer bevorzugt wird. Zweckmäßigerweise wird ein Schmelzofen mit einem Sinterkrustentiegel verwendet. Das Prinzip des Aufbaus eines Induktionsschmelzofens für den Hoch- und Mittelfrequenzbereich ist der EP-B 0 119 877 bzw. EP-A 0 248 727 zu entnehmen. Eine besonders zweckmäßige Ausgestaltung eines derartigen Induktionsschmelzofens lehrt auch die EP-A 0 526 685, deren Inhalt voll in die vorliegende Anmeldung einbezogen wird. Gemäß einer bevorzugten Ausführungsform des erfindungsgemäßen Verfahrens wird dem Sinterkrustentiegel eines Induktionsschmelzofens kontinuierlich oder periodisch das zu schmelzende Pulvergemisch zugeführt und periodisch die Sinterkruste zur Abnahme von Schmelze durchstoßen. Die über eine gekühlte Rinne entnommene Schmelze wird anschließend in freiem Fall abgeschreckt, und zwar durch Anblasen mit einem inerten Gas, wie insbesondere Luft, und/oder durch Besprühen des Strahls mit Wasser. Anders als im Verfahren der EP-A 0 501 143, wonach beim Abschrecken einer aus ZrSiO₄ gewonnenen Schmelze monoklines Zirkonoxid entsteht, bildet sich im erfindungsgemäßen Verfahren in Gegenwart einer ZrSiO₄-Sinterkruste oder unter Einsatz von ZrSiO₄ durch die Anwesenheit eines oder mehrerer die kubische Phase stabilisierender Metalloxide teilweise oder vollständig kubisch stabilisiertes Zirkonoxid in einer amorphen SiO₂-Matrix.

Ein zur Durchführung des erfindungsgemäßen Verfahrens besonders geeigneter Hochfrequenz- und Mittelfrequenz-Induktionsschmelzofen umfaßt eine Schmelzspule mit den Anschlüssen für die Masse und Phase, Vorrichtungen zur Kühlung der Schmelzspule, eine Gußform zur Aufnahme des kühlbaren Spulenbodens, den beim Anfahren des Ofens gebildeten Sinterkrustentiegel sowie eine Vorrichtung zum periodischen Ablassen eines Teils der Schmelze einschließlich einer Vorrichtung zum Durchstechen der Sinterkruste. Der Schmelzofen wird im Bereich von 2200 bis 3000 °C betrieben, wobei die zur Anwendung kommende Temperatur von der Zusammensetzung des Pulvergemischs abhängt. Zur Herstellung von vollständig kubisch stabilisiertem Zirkondioxid liegt die Temperatur im allgemeinen im Bereich von 2500 bis 3000 °C, insbesondere 2500 bis 2800 °C.

Durch das erfindungsgemäße Verfahren läßt sich der Grad der kubischen Stabilisierung einstellen, indem dem Schmelzofen das stabilisierende Oxid bedarfsgerecht zugeführt wird. Das Verfahren erlaubt es auch, ohne den Ofen abstellen zu müssen, hintereinander Produkte mit unterschiedlichem Stabilisator zu gewinnen. Es ist somit möglich, kubisch stabilisiertes Zirkonoxid in auf das jeweilige Anwendungsgebiet abgestimmter Qualität zu erzeugen.

Ein weiterer Gegenstand der Erfindung sind Produkte, in welchen in einer amorphen Kieselsäurematrix teilweise oder vollständig kubisch stabilisiertes Zirkonoxid eingebettet ist. Solche Produkte sind im erfindungsgemäßen Verfahren erhältlich, indem Zirkonsilikat als ZrO₂-Quelle mitverwendet oder ausschließlich verwendet wird. Wie zuvor bereits ausgeführt, läßt sich aus diesen Produkten die Kieselsäurematrix ganz oder teilweise durch einen Laugungsprozeß entfernen.

Das in einer amorphen Kieselsäurematrix eingebettete teilweise oder vollständig kubisch stabilisierte Zirkonoxid, welches zur Stabilisierung ein färbendes Metallatom aus der Reihe La, Ce, Pr, Nd, Sm, Eu, Gd und Tb enthält, wie insbesondere Lanthan, Cer und Praseodym, lassen sich als Pigmente verwenden. Solche Pigmente sind sowohl hochtemperaturbeständig als auch toxikologisch unbedenklich. Die anwesende Kieselsäurematrix begünstigt das Einbrennverhalten dieser Pigmente bei der Herstellung keramischer Dekore. Während in den zuvor bereits zitierten Dokumenten EP-A 0 501 143 und 0 501 142 Pigmente aus thermisch gespaltenem Zirkonsilikat oder dem hieraus gewonnenen monoklinen Zirkonoxid in einer nachgeschalteten Stufe hergestellt werden, ist es erfindungsgemäß möglich, unmittelbar durch das Verfahren zu Pigmenten zu gelangen.

### Beispiele 1 bis 4

Das erfindungsgemäße Verfahren wurde in einem Induktionsschmelzofen mit Sinterkrustentiegel analog der in der EP 0 501 143 dargestellten Vorrichtung durchgeführt. Zu Beginn wurde in an sich bekannter Weise in der Vorrichtung ein Sinterkrustentiegel aus Zirkonsilikat aufgebaut. Um unterhalb der Kopplungstemperatur des Zirkonsandes das Hochfrequenzfeld zu absorbieren und dann den Zirkonsand durch thermischen Kontakt zu erwärmen, wurden in den Zirkonsand Molybdänplättchen eingebettet. Nachdem der Tiegelinhalt bis auf eine Sinterkruste durchgeschmolzen war und sich die Betriebsbedingungen stabilisiert hatten, wurde periodisch Schmelze entnommen und die abgezogene Menge durch jeweils 2,5 kg monoklines Zirkonoxid ersetzt. Auf diese Weise wurden insgesamt 30 kg ZrO₂ zugeführt und im Reaktor der ZrO₂-Gehalt gegenüber dem Gehalt an thermisch gespaltenem ZrSiO₄ erhöht. Anschließend wurden hintereinander 30 kg-Pulvergemische aus ZrO₂-Pr₆O₁₁, dann ZrO₂-CeO₂, ZrO₂-La₂O₃ und schließlich ZrO₂-V₂O₅ dem Tiegel zugeführt in jeweils 2,5 kg Chargen. Jeweils die letzte Charge vor dem Wechsel des Pulvergemischs wurde analytisch und röntgenographisch untersucht. Die Schmelztemperatur betrug ca. 2700 °C.

Die Zusammensetzung der dem Schmelztiegel zugeführten Pulvergemische folgt aus Tabelle 1. In dieser Tabelle sind auch die Atomverhältnisse Zirkon zu stabilisierendem Metallatom der eingesetzten Pulvermischung enthalten. Des weiteren enthält diese Tabelle die Farben der erfindungsgemäß hergestellten Produkte.

**Tabelle 1**

| Beispiel Nr. | 1 | 2 | 3 | 4 |
|---|---|---|---|---|
| ZrO₂ (kg) | 20,4 | 22,24 | 18,9 | 28,15 |
| Pr₆O₁₁ (kg) | 9,6 | | | |
| CeO₂ (kg) | | 7,76 | | |
| La₂O₃ (kg) | | | 11,1 | |
| V₂O₅ (kg) | | | | 1,85 |
| Atomverhältnis Zr zu stabilisierendem Metallatom im Pulververgleich | 75/25 | 79/21 | 70/30 | 92/8 |
| Farbe der erschmolzenen Produkte | grün-gelb | braun | braun-rot | blau-schwarz |

Die Figuren 1 bis 4 zeigen die Röntgenbeugungsaufnahmen der Pulvergemische vor und nach dem Schmelzen sowie jene für kubisches und monoklines ZrO₂. Die Abszisse der Figuren gibt den Winkel an. cZ steht für kubisches, mZ für monoklines Zirkonoxid; PM steht für das eingesetzte Pulvergemisch vor dem Schmelzen, RP für das nach dem Schmelzen erhaltene Reaktionsprodukt.
Figur 1 zeigt das System ZrO₂-Pr₆O₁₁, und zwar Figur 1a die Kurve des Pulvergemischs vor dem Schmelzen sowie zu Vergleichszwecken jene des monoklinen ZrO₂ (Basislinie mit scharfen Peaks). Figur 1b zeigt die Kurve des erfindungsgemäßen Produkts sowie zu Vergleichszwecken jene von kubischem ZrO₂ (Basislinie mit scharfen Peaks). Die Kurve des erschmolzenen Produkts zeigt, daß in diesem Fall Zirkonoxid unvollständig kubisch stabilisiert wurde.
Figur 2 zeigt in analoger Weise die Röntgenbeugungsaufnahmen des Systems ZrO₂-CeO₂ vor (Fig. 2a) und nach (Fig. 2b) dem Schmelzen sowie in Fig. 2a wiederum jene von monoklinem ZrO₂ und in Fig. 2b jene des kubischen ZrO₂. Die Kurve des erschmolzenen Produktes zeigt deutlich, daß ZrO₂ vollständig kubisch stabilisiert wurde.

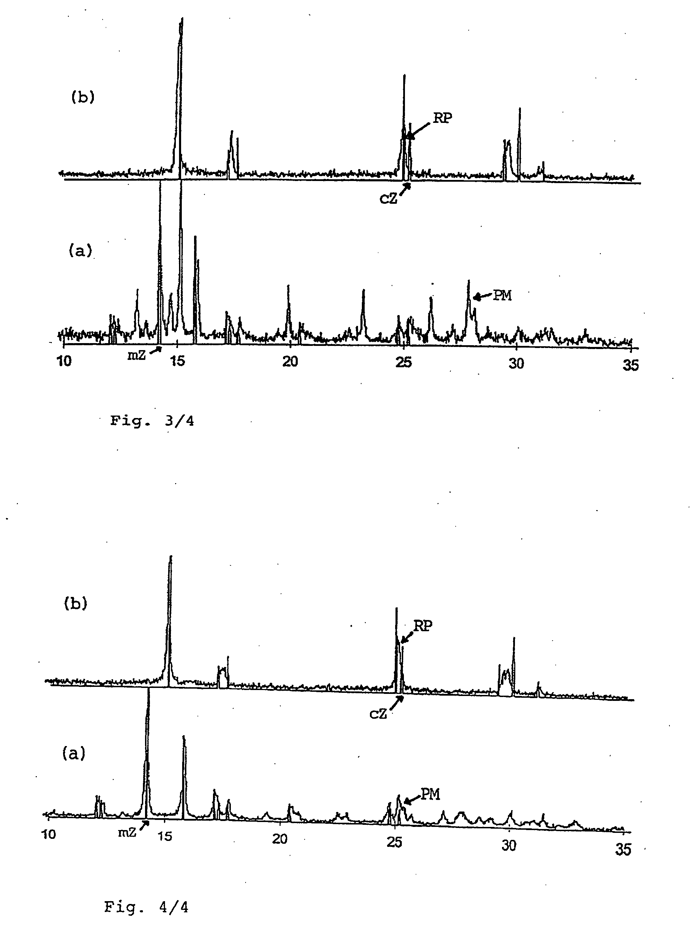

Figur 3 zeigt die Röntgenbeugungsaufnahmen des Systems ZrO₂-La₂O₃ vor (Fig. 3a) und nach (Fig. 3b) dem Schmelzen sowie zu Vergleichszwecken jene von monoklinem ZrO₂ (Fig. 3a) und kubischem ZrO₂ (Fig. 3b). Auch in diesem System wurde vollständig kubisch stabilisiertes ZrO₂ erhalten.
Figur 4 zeigt die Röntgenbeugungsaufnahmen des Systems ZrO₂-V₂O₅ vor (Fig. 4a) und nach (Fig. 4b) dem Schmelzen sowie zu Vergleichszwecken in analoger Weise wie bei den Figuren 1 bis 3 jene des monoklinen bzw. kubischen ZrO₂. Das erhaltene Zirkonoxid ist vollständig kubisch kristallisiert. Die Röntgenbeugungsaufnahmen zeigen des weiteren keine Peaks, die Zirkonsilikat oder einer anderen kristallinen Verbindung, etwa Quarz, zugeordnet werden könnten. Die in den Systemen enthaltene Kieselsäure, welche aus der ursprünglichen Befüllung des Tiegels mit thermisch gespaltenem Zirkonsilikat resultiert, liegt in amorpher Form vor. Ob die Stabilisierung von V₂O₅ oder dem in größerer Menge anwesenden Pr- und La-oxid zuzuschreiben ist (vgl. nachfolgende Analysen) ist noch nicht geklärt.

Tabelle 2 zeigt die Analysen der erfindungsgemäß erhaltenen Produkte. Durch den Wechsel der Pulvergemische enthalten die Produkte im allgemeinen (Ausnahme CeO₂) auch jene Elemente, welche in vorhergehenden Versuchen eingesetzt wurden - versuchsbedingt wurde kein vollständiger Austausch des Tiegelinhalts erzielt.

**Tabelle 2**

| Beispiel Nr. | 1 | 2 | 3 | 4 |
|---|---|---|---|---|
| ZrO₂ | 52,70 | 54,49 | 52,67 | 55,76 |
| Pr₆O₁₁ | 26,36 | 20,00 | 15,41 | 13,10 |
| SiO₂ | 20,95 | 17,77 | 11,36 | 11,88 |
| CeO₂ | | 7,74 | | |
| La₂O₃ | | | 20,56 | 17,90 |
| V₂O₅ | | | | 1,37 |

Wie die Analysen zeigen, enthalten sämtliche Produkte Kieselsäure, wobei deren Gehalt von den Beispielen 1 bis 3 abnimmt. Während Pr₆O₁₁ und La₂O₃ den in Produkten der jeweils folgenden Beispiele versuchsbedingt in abnehmender Menge noch erhalten waren, wurde in den letzten beiden 2,5 kg-Chargen des Systems ZrO₂-La₂O₃ kein CeO₂ mehr gefunden werden.

### Beispiel 5

Die erfindungsgemäß hergestellten Produkte der Beispiele 1 bis 4 wurden 3 Stunden bei 1400 °C thermisch behandelt, um festzustellen, ob bzw. in welchem Umfang die Kristallmodifikation stabil ist.

Bei der thermischen Behandlung kam es zu einer gewissen Farbveränderung - beispielsweise wurde das Produkt ZrO₂-Pr₆O₁₁, das zunächst grün-gelb war, nach gelb verschoben.

Die röntgenographische Untersuchung der thermisch behandelten Produkte zeigte aber, daß es zu keiner Veränderung der Kristallmodifikation des ZrO₂ kam - die Röntgenbeugungsaufnahmen entsprachen im wesentlichen jenen der Figuren 1 bis 4. Obgleich alle Produkte Kieselsäure enthielten, wurde kein Zirkonsilikat gebildet. Sämtliche Produkte blieben auch bei der thermischen Behandlung kubisch.

### Beispiel 6

In der Vorrichtung gemäß Beispiel 1 wurde in die thermisch gespaltene ZrSiO₄-Schmelze ein Gemisch aus 90 Gew.-% ZrSiO₄ und 10 Gew.-% Y₂O₃ (Molverhältnis 91,8:8,2) eingetragen, geschmolzen und der Austrag abgeschreckt. Erhalten wurde kubisch stabilisiertes Zirkondioxid in einer Kieselsäurematrix. Die Morphologie des weissen bis transparenten Produktes umfasste Agglomerate aus faserförmigen und kugelförmigen Teilchen sowie Körner mit abgerundeten Flächen sowie Kugeln unterschiedlicher Größe. Die kugelförmigen Partikel lassen sich leicht von den nicht-kugelförmigen Partikeln trennen. Die kugelförmigen Partikel (Mikrokugeln) lassen sich zur Lack- und Füllstoffdispergierung einsetzen.

### Beispiel 7

Analog zu Beispiel 6 wurde ein Gemisch aus 95 Gew.-% ZrSiO₄ und 5 Gew.-% MgO erschmolzen (Molverhältnis 77,3:22,7). Erhalten wurde kubisch stabilisiertes ZrO₂ in einer Kieselsäurematrix. Die Morphologie entsprach jener des Beispiels 6.

### Beispiel 8

Analog Beispiel 1 wurde ein Gemisch aus 90 Gew.-% ZrO₂ und 10 Gew.-% Y₂O₃ (Molverhältnis 94,5 : 5,5) in eine ZrSiO₄-Schmelze eingetragen und erschmolzen. Der abgezogene und in üblicher Weise durch Besprühen mit Wasser abgeschreckte Schmelzstrahl bestand aus kubisch stabilisiertem Zirkonoxid in einer Morphologie analog Beispiel 6. Das kugelförmige Material wurde auf einer schrägen Vibrationsebene von Material anderer Gestalt abgetrennt. Etwa ein Drittel des Materials war kugelförmig mit einem Korndurchmesser im Bereich von 300 bis 2000 µm.

## Patentansprüche

1. Verfahren zur Herstellung von Produkten auf der Basis von teilweise bis vollständig kubisch stabilisiertem Zirkonoxid (ZrO₂),
umfassend eine thermische Behandlung eines eine Quelle für Zirkonoxid, welche im wesentlichen kein kubisches Zirkonoxid enthält, und ein oder mehrere stabilisierende Metalloxide aus der Reihe MgO, CaO, SrO, Sc₂O₃, Y₂O₃, La₂O₃ und Lanthanidoxide in wirksamer Menge enthaltenden Pulvergemischs,
**dadurch gekennzeichnet,**
**daß** man das Pulvergemisch in einem Lichtbogen- oder Induktionsschmelzofen schmilzt, die Schmelze aus dem Ofen abzieht und mittels eines inerten Kühlgases und/oder Wasser abschreckt.

2. Verfahren nach Anspruch 1,
**dadurch gekennzeichnet,**
**daß** man das Pulvergemisch in einem Hochfrequenz- oder Mittelfrequenz-Induktionsschmelzofen mit Sinterkrustentiegel bei einer Temperatur im Bereich von 2200 bis 3000 °C aufschmilzt, die Schmelze in Form eines Strahls aus dem Ofen abzieht und in freiem Fall durch Anblasen mit einem inerten Kühlgas und/oder durch Besprühen mit Wasser abschreckt.

3. Verfahren nach Anspruch 1 oder 2,
**dadurch gekennzeichnet,**
**daß** man als Quelle für Zirkonoxid pulverförmiges Zirkonsilikat oder ein Gemisch aus Zirkonsilikat und einem nicht-kubischen Zirkonoxid verwendet, wobei Zirkonsilikat in der Schmelze thermisch zu ZrO₂ und SiO₂ gespalten und beim Abschrecken der Schmelze ein teilweise oder vollständig kubisch stabilisiertes Zirkonoxid in einer Matrix aus SiO₂ erhalten wird.

4. Verfahren nach Anspruch 3,
**dadurch gekennzeichnet,**
**daß** man nach dem Abschrecken die matrixbildende Kieselsäure durch eine Behandlung mit Alkalilauge bei 100 bis 200 °C ganz oder teilweise auslaugt.

5. Verfahren nach einem der Ansprüche 1 bis 4,
**dadurch gekennzeichnet,**
**daß** man dem Schmelzofen ein Pulvergemisch zuführt, das pro Mol der Quelle für ZrO₂ ein oder mehrere stabilisierende Metalloxide in einer Gesamtmenge entsprechend 0,05 bis 0,5 , vorzugsweise 0,1 bis 0,3 , Metalläquivalente enthält.

6. Verfahren nach einem der Ansprüche 1 bis 5,
**dadurch gekennzeichnet,**
**daß** man als stabilisierendes Oxid ein oder mehrere farbgebende Oxide aus der Reihe La₂O₃, CeO₂, Ce₂O₃ und Oxiden von Praseodym, Neodym, Samarium, Gadolinium und Terbium in einer Menge von 0,1 bis 0,3 Metalläquivalenten pro Mol ZrO₂ einsetzt.

7. In einer amorphen Kieselsäurematrix eingebettetes teilweise oder vollständig kubisch stabilisiertes Zirkonoxid, erhältlich nach dem Verfahren gemäß einem der Ansprüche 1 bis 6, wobei als Quelle für ZrO₂ ein Zirkonsilikat enthaltendes Pulver eingesetzt wird.

8. Verwendung von in einer amorphen Kieselsäurematrix eingebettetem teilweise oder vollständig kubisch stabilisiertem Zirkonoxid mit im kubischen Kristallgitter zur Stabilisierung eingebauten färbenden Metallatomen aus der Reihe La, Ce, Pr, Nd, Sm, Eu, Gd und Tb als Pigmente und Dispergierhilfsmittel.

## Claims

1. Process for the production of products based on partially to completely cubically stabilised zirconium oxide (ZrO₂),
comprising a thermal treatment of a powder mixture containing a source of zirconium oxide that essentially does not contain any cubic zirconium oxide, and one or more stabilising metal oxides from the list comprising MgO, CaO, SrO, Sc₂O₃, Y₂O₃, La₂O₃ and lanthanide oxides in an effective amount, **characterised in that** the powder mixture is melted in an electric-arc furnace or induction-heated melting furnace, and the melt is removed from the furnace and quenched by means of an inert cooling gas and/or water.

2. Process according to claim 1, **characterised in that** the powder mixture is melted in a high-frequency or medium-frequency induction-heated melting furnace at a temperature in the range from 2200°C to 3000°C, the melt is removed in the form of a stream from the furnace and is quenched in free fall by blowing with an inert cooling gas and/or by spraying with water.

3. Process according to claim 1 or 2, **characterised in that** pulverulent zirconium silicate or a mixture of zirconium silicate and a non-cubic zirconium oxide is used as source of zirconium oxide, wherein zirconium silicate is thermally decomposed in the melt into ZrO₂ and SiO₂ and by quenching the melt a partially or completely cubically stabilised zirconium oxide in a matrix of SiO₂ is obtained.

4. Process according to claim 3, **characterised in that** after the quenching the matrix-forming silicic acid is wholly or partially leached out by a treatment with alkali solution at 100°C to 200°C.

5. Process according to one of claims 1 to 4, **characterised in that** a powder mixture that contains per mole of the source of ZrO₂ one or more stabilising metal oxides in a total amount corresponding to 0.05 to 0.5 metal equivalent, preferably 0.1 to 0.3 metal equivalent, is added to the melting furnace.

6. Process according to one of claims 1 to 5, **characterised in that** one or more colour-imparting oxides from the list comprising La₂O₃, CeO₂, Ce₂O₃ and oxides of praseodymium, neodymium, samarium, gadolinium and terbium is/are used as stabilising oxide in an amount of 0.1 to 0.3 metal equivalent per mole of ZrO₂.

7. Partially or completely cubically stabilised zirconium oxide embedded in an amorphous silicic acid matrix and obtainable by the process according to one of claims 1 to 6, wherein a powder containing zirconium silicate is used as source of ZrO₂.

8. Use of partially or completely cubically stabilised zirconium oxide embedded in an amorphous silicic acid matrix with colour-imparting metal atoms from the list comprising La, Ce, Pr, Nd, Sm, Eu, Gd and Tb as pigments and dispersion auxiliaries incorporated in the cubic crystal lattice for purposes of stabilisation.

## Revendications

1. Procédé de fabrication de produits à base d'oxyde de zirconium (ZrO₂) partiellement ou complètement cubique et stabilisé,
comprenant un traitement thermique d'un mélange de poudre contenant une source d'oxyde de zirconium qui pour l'essentiel ne contient pas d'oxyde de zirconium cubique, et un ou plusieurs oxydes de métal stabilisants de la série MgO, CaO, SrO, Sc₂O₃, Y₂O₃, La₂O₃ et l'oxyde de lanthanide en quantité efficace,
**caractérisé en ce que**
l'on fond le mélange de poudre dans un four de fusion à arc électrique ou à induction, la masse fondue est retirée du four et trempée à l'aide d'un gaz de refroidissement inerte et/ou d'eau.

2. Procédé selon la revendication 1,
**caractérisé en ce que**
l'on fond le mélange de poudre dans un four de fusion à induction à haute fréquence ou à moyenne fréquence avec un creuset à croûte frittée à une température dans le domaine allant de 2200 à 3000°C, la masse fondue est retirée du four sous forme d'un faisceau et trempée en chute libre par soufflement avec un gaz de refroidissement inerte et/ou par arrosage d'eau.

3. Procédé selon la revendication 1 ou 2,
**caractérisé en ce que**
l'on utilise comme source d'oxyde de zirconium sous forme de poudre le silicate de zirconium ou un mélange de silicate de zirconium et d'un oxyde de zirconium non cubique, moyennant quoi le silicate de zirconium se dissocie thermiquement dans la masse fondue en ZrO₂ et SiO₂, et un oxyde de zirconium partiellement ou complètement cubique et stabilisé dans une matrice de SiO₂ est obtenu pendant la trempe de la masse fondue.

4. Procédé selon la revendication 3,
**caractérisé en ce que**
l'on lessive complètement ou partiellement après la trempe l'acide silicique formant la matrice par un traitement avec une lessive alcaline de 100 à 200°C.

5. Procédé selon l'une des revendications 1 à 4,
**caractérisé en ce que**
l'on alimente le four de fusion avec un mélange de poudre qui contient un ou plusieurs oxydes de métal stabilisants en une quantité totale correspondant à 0,05 à 0,5, de préférence 0,1 à 0,3, équivalent de métal par mole de source de ZrO₂.

6. Procédé selon l'une des revendications 1 à 5,
**caractérisé en ce que**
l'on emploie comme oxyde stabilisant un ou plusieurs oxydes colorants de la série La₂O₃, CeO₂, Ce₂O₃ et des oxydes de praséodyme, de néodyme, de samarium, de gadolinium et de terbium en une quantité allant de 0,1 à 0,3 équivalent de métal par mole de ZrO₂.

7. Oxyde de zirconium partiellement ou complètement cubique et stabilisé encastré dans une matrice d'acide silicique amorphe que l'on peut obtenir d'après le procédé selon l'une des revendications 1 à 6, dans lequel une poudre contenant du silicate de zirconium est employée comme source de ZrO₂.

8. Utilisation d'un oxyde de zirconium partiellement ou complètement cubique et stabilisé encastré dans une matrice d'acide silicique amorphe avec des atomes de métal colorants de la série La, Ce, Pr, Nd, Sm, Eu, Gd et Tb incorporés dans le réseau cristallin cubique pour stabilisation en tant que pigments et agents dispersants.
